# EUROPEAN PATENT APPLICATION

(11) **EP 4 741 080 A1**
(43) Date of publication of application: **13.05.2026**
(21) Application number: 24211475.9
(22) Date of filing: 07.11.2024
(51) Int. Cl.: B22F 5/10, B22F 7/08, B22F 10/25, B22F 10/28, B23K 9/04, B23K 15/00, B23K 26/342, B33Y 10/00, B33Y 80/00

(54) **IMPROVED WELDING OF CONFORMAL CHANNELS**

(71) Applicant: Guaranteed, 9060 Zelzate (BE)
(72) Inventor: Antonissen, Joachim, 9060 Zelzate (BE); Debel, Michiel, 9060 Zelzate (BE)
(74) Representative: Patentales BV

(57) **Abstract**

The invention provides, amongst other aspects, a device comprising a substrate; a wall which is welded onto the substrate thereby defining a channel; and a covering layer extending over the substrate and covering at least the wall, wherein the wall is prefabricated, and wherein the covering layer is integrally formed. The invention further provides, amongst other aspects, a method of manufacturing a device comprising a channel preferably the device according to the present invention, the method comprising providing a substrate; welding a wall onto the substrate for defining the channel; and depositing a covering layer covering at least the wall and extending over the substrate, wherein the wall is prefabricated, and wherein the covering layer is deposited by means of a single additive manufacturing step.

## Description

### Field of the invention

The present invention relates to the technical domain of additive manufacturing, such as three-dimensional (3D) printing or welding, of conformal channels. For instance, the present invention relates to a method of using additive manufacturing technologies, e.g., directed energy deposition (DED) based technologies, such as using wire, possibly in combination with powder-based technologies and/or coldspray technologies and/or other additive manufacturing technologies, to repair and/or manufacture parts, such as slow-moving parts or molds, with conformal channels.

### Background art

Traditional mold cooling often relies on machining, such as drilling, interconnected channels into the mold and circulating a cooling fluid, such as water, through these channels. These channels are often created using conventional machining techniques, such as drilling. While effective for molds which have a simple shape, e.g., a flat surface, such an approach suffers from inherent limitations. One significant drawback is the non-uniform cooling it often produces. Circulating cooling fluid through bored channels often leads to uneven temperature distribution within the mold, thereby, resulting in undesirable effects on the part that is being molded, such as, part cycle times, part quality, and potentially even warping. Moreover, traditional methods struggle to deliver cooling fluid precisely where needed, especially near the actual molding surface of molds with complex, contoured shapes. Similarly in the application of heating, e.g., heating elements in molds where heated fluid is circulated through the channels, traditional methods struggle to deliver the heated fluid precisely where needed, especially near complex interfaces, e.g., complex interfaces of molds.

Attempts have been made in the past to address these challenges through conformal cooling passages within molds. These passages are designed to closely follow the contour of the part being produced, allowing for more uniform cooling and potentially enhancing part quality. However, implementing conformal cooling in molds with intricate geometries remains a complex task, particularly when using traditional manufacturing techniques. US2019168433A1 describes welding a support into the mold structure, which can be susceptible to issues like cracking or inadequate weld adhesion between the weld support and the mold material. This can lead to potential leaks, decreased cooling efficiency, and reduced overall mold lifespan, highlighting the need for further innovation in this field.

These challenges highlight the need for improved channels, improved devices comprising such channels, and improved methods of manufacturing such channels that can overcome these limitations.

The present invention aims at addressing issues, such as the issues mentioned above.

### Summary of the invention

According to a first aspect, the present invention provides a device comprising a substrate; a wall which is attached, e.g., welded or adhered, onto the substrate thereby defining a channel; and a covering layer extending over the substrate and covering at least the wall, wherein the wall is prefabricated, and wherein the covering layer is integrally formed.

The prior art, such as US2019168433A1, describes creating an open channel in a molding surface of the mold, receiving a weld support in the channel, and filling a cavity defined by the weld support and the molding surface. However, US2019168433A1 does not disclose welding a wall onto the substrate (i.e., on the outer surface of the substrate). Furthermore, US2019168433A1 does not disclose a covering layer which extends over the substrate and covering at least the wall, and which is integrally formed. Therefore, in US2019168433A1, the created open channel adds complexity to welding of the weld support. The lateral walls in the open channel increase the difficulty of welding the weld support in a robust manner, leaving the weld support prone to fatigue and cracks, particularly at the welding of the weld support to the lateral walls. This is particularly due to the weld support being subjected to prolonged heating at high temperatures and simultaneously to cooling fluids. Additionally, cyclical mechanical loads resulting from frequent opening/closing and/or pressurizing of molds can result in fatigue. Furthermore, the filled cavity, particularly at the initiation sites (e.g., the weld beads in contact with the weld support) are also prone to propagation and fatigue, eventually leading to cracks. This is particularly due to the weld support being subjected to prolonged heating at high temperatures and fluctuations of temperatures caused by the cooling fluid. Thus, the invention may advantageously provide a more effective and robust device with channels. By comprising a prefabricated wall which may be attached, e.g., welded, onto the substrate and by comprising a covering layer extending over the substrate and covering at least the wall, which is integrally formed, the device allows to provide channels within the device in a more flexible manner. Thereby, the wall allows to create more complex channels which may be conformal to the curvature of the substrate, and particularly provide more flexibility in the geometry and performance of the channels, and thereby the device, Thereby, the covering layer allows to create an outer surface of the device which can be user-defined and/or functionally graded, e.g., can have material(s) for a particular function, and thus, provides more flexibility in the shape and more particularly in the performance of the device. This may be advantageous when fabricating a user-defined mold for a particular application. By integrally forming the covering layer over the substrate and covering at least the wall, the covering layer may advantageously require minimal post-processing, thereby reducing the number of steps for manufacturing a complex covering layer and device.

In particularly advantageous embodiments, the channel is multi-dimensional comprising twists and turns. While the prior art US2019168433A1 describes a circuitous fluid passage, it does not disclose a multi-directional channel comprising both twists and turns. Furthermore, due to the requirement of lateral walls for the creation of a channel, it would not be possible using the method of US2019168433A1 to provide a combination of twists and turns. The twists and turns in the channel can allow for complex channel pattern, which can be beneficial in improving heat transfer, by increasing the contact area between the wall and the part to be molded. By introducing twists and turns, standstill of fluids within the channel may be reduced or even avoided, which can improve the efficiency of the fluid. Related, the twists and turns can help get the fluid to be as close as possible to the outer surface, e.g., a molding surface, in a homogeneous way. This may be complex when taking into consideration that devices, such as molds, may also contain elements, such as ejectors, which may force the channel to deviate from a straight line . Thus, the twists and turns may allow to increase the length of the channel which can increase the time the fluid spends in proximity to the interface, thereby more effectively facilitating the exchange of heat at the interface. Hence, the present invention may allow to provide an optimized positioning of the channel, and a more optimized extension of the channel on the substrate.

Such embodiments may allow to provide a channel which extends on the substrate and preferably therethrough. For example, an inlet and/or outlet of the channel may extend from/to a first side of the substrate which is opposite to the second side on which the wall is attached, e.g., welded, (i.e., said outer surface of the second side).

In embodiments, the channel is conformal to the contour of the substrate and preferably to the contour of the covering layer. This may advantageously allow to more flexibly provide the channel on substrates with complex shapes. Furthermore, this may advantageously allow to more flexibly provide the channel in between the substrate and the covering layer, both of which having a complex shape. The covering layer can allow to more flexibly provide an outer shape for a particular part to be molded. The covering layer can therefore create a different contour which is particular to the part to be molded, in view of the contour of the substrate. Another advantage is the possibility of having the channels conformal to the interface of the mold, which allow the heat exchange to be more effective and more particularly homogeneous. Thus, the present invention increases the choice of substrates that can be used to create devices with conformal channels. This can reduce the amount of waste, e.g., from creating open channels such as what is described in the prior art, and provides more flexibility in fabricating devices, e.g., molds.

In embodiments, the wall is prefabricated by using an additive manufacturing technology, preferably a high-accuracy additive manufacturing technology, such as high-accuracy printing or high-accuracy powder-based additive manufacturing. Examples of high-accuracy additive manufacturing may include any one or combination of: powder bed fusion (PBF), laser-PBF (L-PBF), laser powder deposition (LPD), selective laser melting (SLM), fused deposition modeling (FDM), fused filament fabrication (FFF), direct metal laser sintering (DMLS), electron beam melting (EBM), multi jet fusion (MJF), cold metal fusion, binder jetting, etc. This may advantageously allow to fabricate the wall with very tight tolerances (e.g., within microns), enabling the fabrication of intricate geometries and highly accurate walls. This may advantageously allow to more effectively fabricate the wall with complex patterns which are challenging or impossible to manufacture using traditional methods. This may advantageously allow to fabricate the wall with improved mechanical properties due to the controlled melting and consolidation of metal powders in a vacuum environment. This may advantageously allow to fabricate the wall with smooth surfaces and minimal post-processing required, thereby allowing for improved flow of fluid and improved robustness.

In embodiments, the covering layer is deposited by using an additive manufacturing technology, preferably a high-deposition-rate additive manufacturing technology, such as high-deposition-rate printing. Examples of high-deposition-rate additive manufacturing may include any one or combination of: direct energy deposition (DED), wire arc additive manufacturing (WAAM), laser-wire deposition, liquid metal deposition (LMD), electroslag cladding, submerged arc welding, etc. This may advantageously reduce the time required to manufacture, the covering layer, and thereby the device, and also reduce the costs of materials (e.g., wire costs less than powder per cm³) and of manual labor. This may advantageously allow to create complex and intricate geometries particular to the application, e.g., complementary to a part to be molded, compared to traditional methods. High-accuracy additive manufacturing technologies, particularly powder-based printing technologies, may be limited by the variety of materials which can be used and/or by the inherent porosity of such materials which in some cases may result in a deterioration of the thermal conductivity of the device, thereby, at least partially offsetting the benefits of using conformal cooling channels. Furthermore, the high-accuracy additive manufacturing technologies, particularly powder-based printing technologies, may be limited in the size of parts that can be produced, while also being expensive, which further limits the application range. By using high-deposition-rate additive manufacturing technologies, the present invention may allow a wider variety of materials, e.g., with higher thermal conductivity and/or chemical resistance, which may allow to produce a porosity-free covering layer.

In particularly advantageous embodiments, the wall is prefabricated by using high-accuracy additive manufacturing technologies, such as high-accuracy printing, and the covering layer is deposited by using high-deposition-rate additive manufacturing technologies, such as high-deposition rate printing. This may advantageously allow for a hybrid and/or synergetic use of different additive manufacturing technologies, thereby optimizing the performance of manufacturing the device, while ensuring the robustness of the device. Thus, the advantages of both high-accuracy and high-deposition rate additive manufacturing technologies may be optimally combined.

In embodiments, the covering layer extends over the substrate at least 1.5 times or at least 2 times or at least 3 times the width of the wall. This may advantageously ensure that the covering layer covers at least the wall and not only portions of the substrate in immediate proximity to the wall, but also adjacent portions of the substrate in the width direction of the substrate. This may advantageously reduce the amount of material printed to cover wall and the portions of the substrate in immediate proximity to the wall, and optionally the adjacent portions of the substrate. In some embodiments, such as non-mold-related embodiments, the outer surface of the substrate is not required to be (completely) covered. Alternatively, the covering layer extends across the whole substrate and/or completely covering the substrate. This may advantageously ensure that covering layer completely covers the outer surface of the substrate, which may ensure that the substrate is protected from environmental factors, such as high heat. This may be particularly advantageous to mold-related embodiments, whereby the covering layer is deposited to form a shape for a particular part to be molded, i.e., a complementary shape to the part to be molded.

In embodiments, the wall comprises two legs, wherein each leg comprises a foot attached, e.g., welded, onto the substrate. This may advantageously increase the volume of the channel defined between the wall and the substrate. In embodiments, each leg forms an angle with an outer surface of the substrate of at least 60 degrees, preferably at least 90 degrees. This may advantageously provide an improved welding angle of each foot onto the substrate, thereby improving the welding of the wall, preferably each foot, onto the substrate. In preferred embodiments, said angle is in accordance with welding parameters used (i.e., specific settings and conditions used to control the welding process), such that a strong and reliable weld may be obtained. This may be advantageous to avoid lack-of-fusion defects due to poor accessibility of the foot.

In particularly advantageous embodiments, each leg comprises a section which tapers towards the respective foot. This may advantageously allow for a full weld penetration, i.e., the welding penetrating through the foot, which improves the welding of the wall onto the substrate, e.g., preventing excess weld penetration or preventing a partial penetration, and thereby eliminating the risk of sharp notches that can serve as crack initiation sites. Furthermore, the tapering may also increase the dimensions of the channel while ensuring the rigidity and structural integrity of the wall. Moreover, the tapering provides enough space for accommodating a welding torch, which is desired for welding.

In particularly advantageous embodiments, at least two of the substrate, the wall, and the covering layer comprise different materials, preferably wherein all of the substrate, the wall, and the covering layer comprise different materials. This may advantageously allow for more functionality and flexibility in the manufacturing of the device. For example, the wall may comprise a material for high-accuracy printing, such as 316 stainless steel, the substrate may comprise a low-cost material, such as cast steel, and the covering layer may comprise bronze. In this example, the strength, durability, and thermal conductivity of the outer surface of the covering wall can be increased, while ensuring the durability of the wall, which may be suitable for molding processes. In another example, the substrate may comprise or may be formed of forged steel, the wall may comprise or may be formed of 316L, and the covering layer may comprise or may be formed of a chemically resistant and/or wear-resistant alloy, such as chromium molybdenum CrMo steel.

In embodiments, the substrate comprises a first layer formed of a first material and a second layer formed of a second material atop the first layer, wherein the wall is welded onto the second layer, preferably wherein the first material is a forged material, and the second material is a printed material. This may advantageously allow for more freedom to reduce costs, by e.g., using a cheaper first material, and allow for more freedom to reduce the thermal conductivity with the first layer. For example, the second material may be less thermally conductive than the first material. For example, the first layer is formed of cast steel, and the second layer is formed of 316 stainless steel.

In embodiments, the device comprises a groove in the substrate thereby further defining the channel in the substrate. This may advantageously increase the size of the channel or may allow for a channel defined by the groove and the wall which may be substantially flat. Preferably, the groove may be formed in the second layer of the substrate. Forming the groove in the second layer, which may be formed of a material having low thermal conductivity may advantageously allow for improved heat exchange, such as between the channel and the outside of the device (e.g., a part to be molded) and not with the first layer of the substrate.

In embodiments, an inner surface of the groove comprises or is made of the second material. For example, the inner walls of the groove comprises or is made of the second material. By providing a groove, a larger channel can be obtained, and by having an inner surface of the second material, the present invention may further improve the heat exchange between the channel and the outside of the device (e.g., a part to be molded) and not with the first layer of the substrate. Preferably, the inner surface of the channel may comprise or may be made of the second material. For example, the inner walls of the groove and the wall welded onto the second layer comprise or are made of the second material. With the whole channel comprising or being made of the second material, the present invention allows for even more improved heat exchange between the channel and the outside of the device.

In groove-related embodiments, the wall is flat and preferably the wall is flush with the substrate. In such embodiments, slots adjacent to the wall and/or the groove may be first created (e.g., by subtractive manufacturing), such that the wall may be welded onto the substrate at the slots. This may advantageously allow the covering layer to be more efficiently and effectively deposited on a continuous surface, while providing greater positional accuracy thereof, and without having to take into account any differential height of the wall. In such embodiments, the channel may be defined within the substrate.

In embodiments, the channel has a diameter or a width of less than or equal to 30 mm, preferably less than or equal to 20 mm, even more preferably less than or equal to 10 mm. The prior art US2019168433A1 describes creating an open channel, receiving a weld support in the channel, and filling a cavity defined by the weld support and the molding surface. However, with the approach of the prior art, smaller diameters or widths of channels would be difficult to achieve, or even not possible, without issues of fatigue and cracks. Furthermore, with the approach of the prior art, smaller diameters or widths of channels would prevent the accessibility of a welding torch, particularly for providing a welding having a full penetration.

According to a second aspect, the present invention provides a method of manufacturing a device comprising a channel, preferably the device according to the present invention, the method comprising: providing a substrate; welding a wall onto the substrate for defining the channel; and depositing a covering layer covering at least the wall and extending over the substrate, wherein the wall is prefabricated, and wherein the covering layer is deposited by means of a single additive manufacturing step. By depositing the covering layer by means of a single additive manufacturing step over the substrate and covering at least the wall, the covering layer may advantageously require minimal post-processing, thereby reducing the number of steps required for manufacturing a complex covering wall and device.

The method of the present invention may advantageously provide a more effective and robust way of providing a device with channels.

According to a third aspect, the present invention provides a kit comprising: a substrate; a wall which is to be welded on the substrate for defining a channel; and a set of instructions and/or illustrations directing a user to weld the wall on the substrate and to integrally form a covering layer extending over the substrate and covering at least the wall, thereby the covering layer is homogeneous, allowing to manufacture a device with a homogeneous outer surface.

Preferred embodiments and their advantages are provided in the description and the dependent claims.

### Brief description of the drawings

The present invention will be discussed in more detail below, with reference to the attached drawings.
Fig. 1A-1D shows a method for forming a fluid passage in a mold according to the prior art.
Fig. 2A shows an example of a device according to the invention, and Fig. 2B shows a cross-section of the device of Fig. 2A.
Fig. 3A shows a second example of a device according to the invention, and Fig. 3B shows a cross-section of the device of Fig. 3A.
Fig. 4A-4C show an example of a device according to the present invention.
Fig. 5A-5C show an example of a device according to the present invention.
Fig. 6A-6C show an example of a device according to the present invention.
Fig. 7A-7C show an example of a device according to the present invention.
Fig. 8A-8C show an example of a device according to the present invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "substrate" refers to a foundational structure serving as a base upon which the wall and the covering layer are provided. It may define an initial shape and dimensions of the device. For instance, in mold-related embodiments, the substrate is a pre-shape for arriving at the final device shape and dimensions. The substrate may serve as a platform on top of which the wall may be attached, e.g., by welding or adhering, or other attaching means, and the covering layer is integrally formed, ultimately creating a unified and functional device. The substrate may be fabricated from one or more metals and/or alloys, such as, steels (e.g., carbon steel, alloy steels, stainless steels), aluminum (e.g., aluminum alloys, such as 6061, 6063, 6082, and 7075), cast or forged or rolled steel, bronze, etc. In embodiments, the substrate may comprise or may be formed of a forged material. In other non-limiting examples, the substrate may be fabricated from one or more (thermo)plastics, such as, Polyethylene (PE), Polypropylene (PP), Polyvinyl Chloride (PVC), Acrylonitrile Butadiene Styrene (ABS), Polycarbonate (PC), Polyethylene Terephthalate (PET), Polytetrafluoroethylene (PTFE). Thus, the providing of the substrate may comprise fabricating the substrate by any type of manufacturing technologies, such as, added manufacturing, forging, casting, rolling, printing, etc.

In this document, the term "wall" refers to a structure which may be prefabricated separately from the substrate and the covering layer. The wall may have a geometry such that it may be tailored for specific applications, such as fluid conveyance, cable routing/encapsulation, and/or structural reinforcement. For example, the wall may be flat or curved (e.g., has a polygonal cross-section) or may comprise a plurality of (interconnected) walls. The wall may serve as a structural support for depositing the covering layer on the wall and covering the wall. The wall may be fabricated by means of any one of added manufacturing, forging, printing, etc. Preferably, the wall may be fabricated using a high-accuracy added manufacturing technology, such as high-accuracy printing or a high-accuracy powder-based added manufacturing technology, such as PBF, L-PBF, LPD, SLM, FDM, FFF, DMLS, EBM, MJF, etc. Examples of (powder-based) materials which may be comprised in or may form the wall include: stainless steel (e.g., 304, 316, etc.), titanium alloys (e.g., Ti-6AL-4V), aluminum alloys, cobalt-chromium alloys, copper, carbon steels, bronze, etc. Such materials comprised or form the wall may allow for at least one of: high accuracy fabrication of complex structures and the fabrication of more robust structures. In other non-limiting examples, the wall may be fabricated from one or more (thermo)plastics, such as, Polyethylene (PE), Polypropylene (PP), Polyvinyl Chloride (PVC), Acrylonitrile Butadiene Styrene (ABS), Polycarbonate (PC), Polyethylene Terephthalate (PET), Polytetrafluoroethylene (PTFE). Materials, such as copper, carbon steels, and bronze may advantageously provide good thermal conductivity compared to the other materials. In embodiments, the wall comprises two legs, wherein each leg comprises a foot. The term "foot" may refer to a root face. wherein the welding of the respective foot may relate to welding of a respective root, i.e., a space where the foot and the substrate meet before any weld material is added.

In this document, the term "channel" refers to a defined space or path formed within the device. The channel may be defined by attaching the wall onto the substrate, creating a continuous, enclosed path along their interface. The term "attaching" may refer to any one or combination of connected, joining, adhering, bonding, fixing, and welding preferably attaching concerns welding. In embodiments, a groove may be first formed in the substrate, providing a space or path, wherein the wall being attached onto the substrate, such as by welding or adhering, or other attaching means, preferably contiguous with the groove, further effectively "caps" the groove and defines the channel between the groove and the wall, i.e., between the inner surface of the groove and the wall. The groove may be formed by machining, preferably by subtractive manufacturing, such as milling, turning, honing, etc. The channel may have a width related to a width of the wall and/or a width of the groove. Said widths may relate to a dimension perpendicular to the respective lengths along which the respective of the channel, wall, and groove extend. The term "multi-directional" refers to bi-directional or tri-directional, and refers to the extension along multiple directions, wherein said multiple directions may relate to a multi-dimensional space. Such a channel may lie on a line, or may lie on a plane, or may not lie on a plane. In embodiments, the multi-directional channel comprises twists and turns. Said turns may relate to curves of the channel. In embodiments, at least one of a radial curvature of at least one of the curves is less than or equal to 10 cm, less than or equal to 9 cm, less than or equal to 8 cm, less than or equal to 7 cm, less than or equal to 6 cm, less than or equal to 5 cm, less than or equal to 4 cm, etc. In embodiments, the radial curvature may be multi-planar. The present invention may allow to reduce the radial curvature of the channel, which may allow to optimize the positioning and/or the shape of the channels.

In this document, mold-related embodiments refer to one or more of the (channel-related) embodiments, but not necessarily all of the embodiments, wherein the device concerns a mold. Non-mold-related embodiments refer to one or more of the embodiments, but not necessarily all of the embodiments, wherein the device does not concern a mold.

In this document, the term "covering layer" refers to a layer which may be integrally formed on the substrate covering at least the wall. The covering layer may contribute to the device's overall functionality, such as the outer surface of the mold to be in contact with the part to be molded. The covering layer may serve as a protective barrier. The covering layer may be deposited by a single additive manufacturing step. In embodiments, the covering layer is deposited by a single printing step and/or a single cold spray step. Cold spray technologies may advantageously allow to reduce the temperatures for fabricating the covering layer, which means it can be used on heat-sensitive materials without causing damage. This may advantageously allow to reduce residual stresses and distortion compared to melting, which may be crucial for maintaining accuracy of the covering layer contour. In preferred embodiments, the covering layer is deposited by a single high-deposition-rate additive manufacturing step, particularly a high-deposition-rate printing step or a high-deposition-rate cold spray step. Examples of high-deposition-rate additive manufacturing technologies include DED, WAAM, LMD, EBAM, etc. High-deposition-rate added manufacturing technologies advantageously allow to deposit the covering layer more quickly and at a higher quality, of one or more materials from a larger variety of materials (e.g., alloys with higher thermal conductivity), compared to other technologies, such as high-accuracy added manufacturing technologies or cold spray technologies. Examples of materials which may be comprised in or may form the covering layer include: carbon steel, low-alloy steel (e.g., 4340, CrMo), high-alloy steels (e.g., stainless steels, duplex stainless steels, etc.), nickel alloys (e.g., Iconel 625), aluminum alloys (e.g., 6061, 7075), titanium alloys, magnesium alloys, bronze, etc. Such wire-based material(s) comprised in or form the covering layer may allow for at least one of: higher-deposition-rate added manufacturing, increased material variety (compared to powder-based materials), lower level of porosity of the materials and/or increased thermal conductivity thereof (compared to powder-based materials), and a broader choice of materials (compared to powder-based materials). In other non-limiting examples, the wall may be fabricated from one or more (thermo)plastics, such as, Polyethylene (PE), Polypropylene (PP), Polyvinyl Chloride (PVC), Acrylonitrile Butadiene Styrene (ABS), Polycarbonate (PC), Polyethylene Terephthalate (PET), Polytetrafluoroethylene (PTFE). In embodiments, the covering layer is deposited at a deposition rate of at least 1 kg/h, at least 2 kg/h, at least 3 kg/h, at least 4 kg/h, at least 5 kg/h, at least 6 kg/h, at least 7 kg/h, at least 8 kg/h, at least 9 kg/h, at least 10 kg/h, etc.

In this document, the term "slot" may refer to an opening or a cut made in the substrate, particularly at the edge of the groove and/or the wall. The slot may be a transitional opening between the substrate and the wall and/or groove. In embodiments, the slot concerns a bevel or a chamfer, which may involve a (downward) slope from the outer surface of the substrate. In embodiments, the bevel or chamfer is symmetric, wherein the sides of the bevel or chamfer are equal or wherein the angles on both sides of the bevel or chamfer are equal. Alternatively, the bevel or chamfer may be non-symmetric, wherein the sides of the bevel or chamfer may be different or wherein the angles on both sides of the bevel or chamfer may be different. In embodiments, the bevel or chamfer is rounded. In embodiments, the two slots adjacent to the wall and/or groove are identical. Alternatively, the two slots adjacent to the wall and/or groove are different. In embodiments, at least one slot, preferably two slots, are formed adjacent to the wall and/or the groove, e.g., by subtractive manufacturing, before welding the wall onto the substrate. The wall may be attached onto the substrate at the slot(s), such as by welding or adhering, or other attaching means, i.e., the attaching is performed in the slot(s) and/or between the wall the inner surface of the slot(s). In groove-related embodiments, the slot(s) are formed or provided after forming or providing the groove. In this document groove-related embodiments refer to one or more of the embodiments, but not necessarily all of the embodiments, wherein the device comprises a groove.

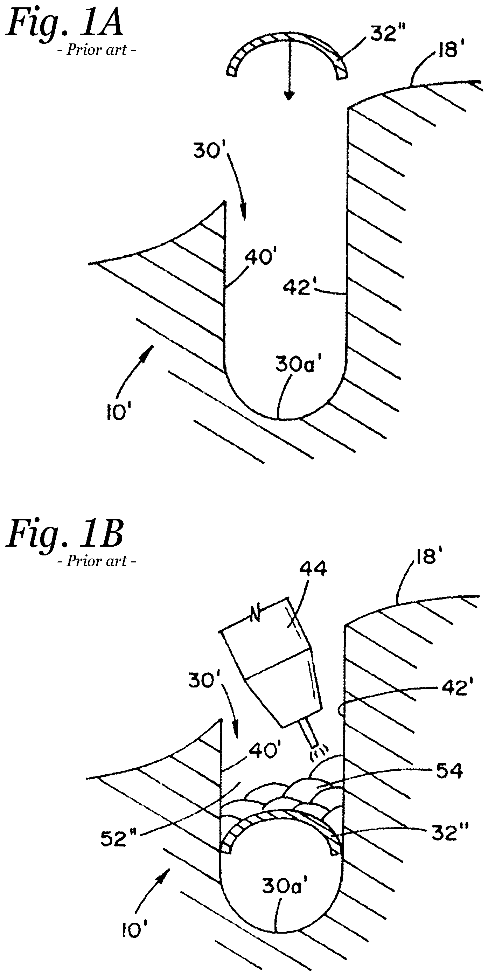

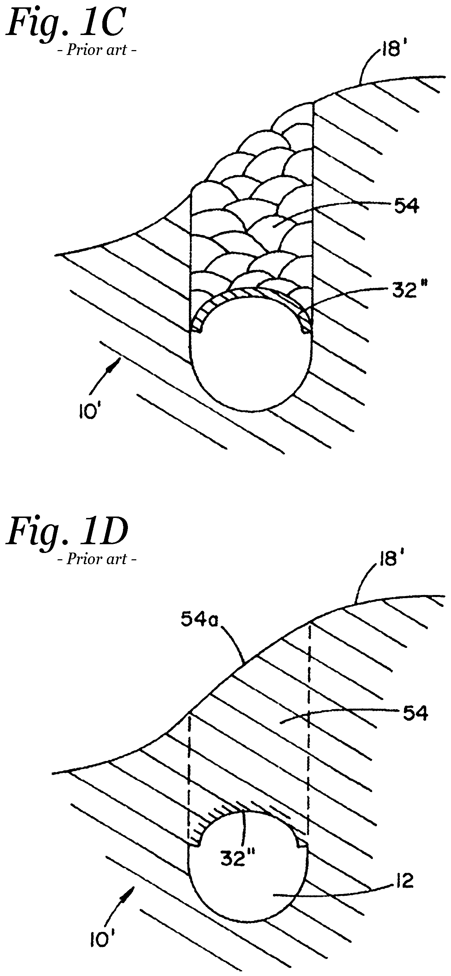

Fig. 1A-1D show a method for forming a fluid passage 12 in a mold 10' according to the prior art. Fig. 1A and 1B show a weld support 32" installed in a channel 30' having a lower channel 30a' defined in a surface 18' of a mold 10' and a fill material 54 being welded across the channel 30' above the weld support 32' for closing the channel 30'. Also as shown are spaced apart lateral walls 40' and 42'. Fig. 1B shows a welder 44 depositing fill material 54 above the weld support 32" to fill a cavity 52" defined between the weld support 32" and the molding surface 18' of the mold 10'. Fig. 1C shows that the fill material 54 fills the cavity 52" and extends beyond the molding surface 18' of the mold 10'. Fig. 1D shows the fill material 54 being reduced so that an upper surface 54a of the fill material 54 is contiguous with the molding surface 18' of the mold 10'. Unlike the prior art, the present invention provides a device comprising a substrate, a wall which is welded onto the substrate thereby defining a channel, and a covering layer extending over the substrate and covering at least the wall, wherein the wall is prefabricated, and wherein the covering layer is integrally formed. The prior art does not disclose welding a wall onto the substrate and depositing the covering layer by means of a single additive manufacturing step over (the outer surface of) the substrate and covering at least the wall.

In embodiments, the wall and/or the channel extends along at least one direction, preferably along two or more directions. In embodiments, a first portion of the wall and/or the channel extends along a first direction and a second portion of the wall and/or the channel extends along a second direction, wherein the first direction is different from the second direction, for instance wherein the first direction is opposite to the second direction, or wherein the first direction form an angle with the second direction, such as at least 10 degrees, at least 20 degrees, at least 30 degrees, at least 40 degrees, at least 45 degrees, at least 50 degrees, at least 60 degrees, at least 70 degrees, at least 80 degrees, at least 90 degrees, etc.

In embodiments, the wall is a multi-directional wall comprising twists and turns. Additionally, or alternatively, the wall may be conformal to the contour of the substrate. This may allow to more easily define a channel extending in multiple directions and comprising twists and turns, and, additionally or alternatively, being conformal to the contour of the substrate. However, the channel may extend in multiple directions and comprise twists and turns, and, additionally or alternatively, may be conformal to the contour of the substrate, without the wall extending in multiple directions and/or comprising twists and turns, and, additionally or alternatively, being conformal to the contour of the substrate.

In embodiments, the wall is prefabricated by using a high-accuracy additive manufacturing technology, such as high-accuracy printing, which may allow to fabricate, e.g., print, complex shapes. Such complex shapes may be related to the wall being multi-directional and comprising twists and turns. Such complex shapes may be related to the wall additionally or alternatively being conformal to the contour of the substrate, which may have a complex outer surface and/or a non-uniform outer surface and/or a non-planar outer surface and/or a multi-planar outer surface. By using high-accuracy additive manufacturing technology, such as high-accuracy printing, the wall can me more accurately fabricated compared to other conventional techniques such as bending tubes or using tube cut-outs or welding said tubes or cutouts to each other to form the complex pattern.

In embodiments, the covering layer is deposited by using high-deposition-rate additive manufacturing technology, such as high-deposition-rate printing. This allows the covering layer to be deposited along the direction of extension of the wall and/or the channel. Additionally, or alternatively, the covering layer may be deposited along at least one direction forming a respective at least one angle, e.g., up to 90 degrees, such as at least 10 degrees, at least 20 degrees, at least 30 degrees, at least 40 degrees, at least 45 degrees, at least 50 degrees, at least 60 degrees, at least 70 degrees, at least 80 degrees, etc., with the direction of extension of the wall and/or the channel. A combination of depositing the layer, in some portions along the direction and in other portions at one or more angles with the direction of extension of the wall and/or the channel, can allow for a more efficient and effective way of depositing the covering layer in a single additive manufacturing step, thereby ensuring that the covering layer is integrally formed. For instance, on portions of the substrate in immediate proximity to the wall, the covering layer may be deposited along the direction of extension of the wall and/or the channel, such as along the length of the wall and/or channel, and on portions of the wall, the covering layer may be deposited perpendicular to the direction of extension of the wall and/or the channel, such as along the width of the wall and/or channel.

In embodiments, the covering layer covers at least the wall and portions of the substrate in immediate proximity to the channel and/or the wall. In embodiments, the covering layer extends over the substrate at least a multiple time the width of the wall and/or channel. For example, the covering layer extends over the substrate at least 1.1 times, 1.2 times, 1.3 times, 1.4 times, 1.5 times, 1.6 times, 1.7 times, 1.8 times, 1.9 times, 2 times, 3 times, etc. the width of the wall, and optionally extending across the whole substrate. In embodiments, the covering layer extends over at most 10% of the substrate, at most 20% of the substrate, at most 30% of the substrate, at most 40% of the substrate, at most 50% of the substrate, at most 60% of the substrate, at most 70% of the substrate, at most 80% of the substrate, at most 90% of the substrate, at most 100% of the substrate, etc.

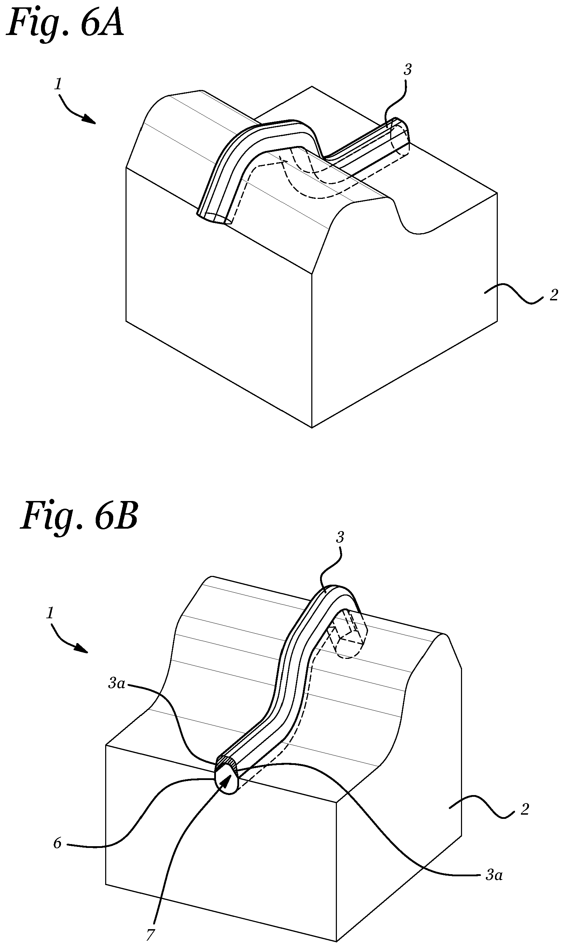

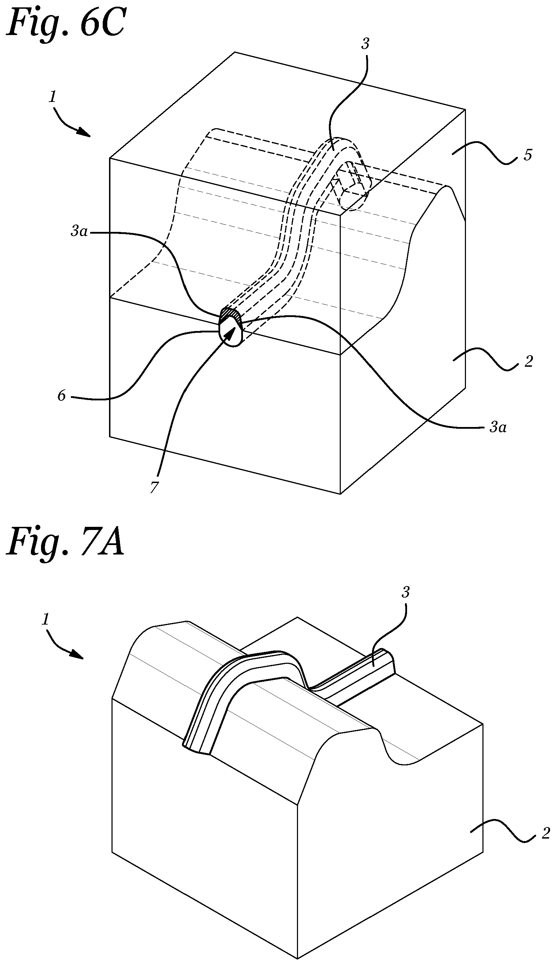

In embodiments, the wall comprises two legs, wherein each leg comprises a foot attached, e.g., by welding or adhering, or other attaching means, onto the substrate. In such embodiments, the wall may be a wall with a non-convex shape, such as a curved wall, or a plurality of interconnected walls such as a bridge or ramps. In preferred embodiments, each leg comprises a section which tapers towards the respective foot. For example, an internal side of the section of each leg may taper towards the foot, e.g., as shown in Fig. 6B-6C, Fig. 7B-7C, Fig. 8B-8C. In another example, an external side of the section of each leg may taper towards the foot.

In embodiments, the wall is flat or defines a plane. For example, the outer surface of the wall may be flat. In other examples, the wall may have a polygonal shape, such as a square shape, a rectangular shape, a quadrilateral shape, a trapezoidal shape, etc. In embodiments, the edges of the wall taper, e.g., forming a trapezoidal shape.

In embodiments, at least two of the substrate, the wall, and the covering layer comprise or are formed of different materials, preferably wherein all of the substrate, the wall, and the covering layer comprise or are formed of different materials. For example, the wall and the covering layer comprise or are formed of the same material, such as stainless steel, and the substrate comprises or is formed of cast or forged or rolled steel. In another example, the covering layer comprises or is formed of bronze, the wall comprises or is formed of stainless steel, and the substrate comprises or is formed of cast or forged or rolled steel. Thus, the covering layer may improve corrosion resistance and increase thermal conductivity, while the wall may reduce the thermal conductivity, e.g., towards the substrate. Thus, this may advantageously allow for more flexibility in the. functionality and quality of the elements of the device. In embodiments, at least two of the substrate, the wall, and the covering layer comprise or are formed of the same material, preferably wherein all of the substrate, the wall, and the covering layer comprise or are formed of the same material.

In embodiments, the substrate comprises a first layer formed of a first material and a second layer formed of a second material atop the first layer, wherein the wall may be attached, e.g., by welding or adhering, or other attaching means onto the second layer. In preferred embodiments, the first material is different from the second material. Additionally, or alternatively, the first layer is formed by means of a nonprinting technique and the second layer is formed by means of a printing technique, such as high-accuracy printing or preferably high-deposition-rate printing. In embodiments, the second layer and the covering layer may be deposited by the same additive manufacturing technology, such as the same high-deposition-rate printing, e.g., by WAAM. In embodiments, the first material comprises or is formed of a forged material, and the second material comprises or is formed of a printed material. For example, the first layer is a forged layer, and the second layer is a printed layer using additive manufacturing technologies, such as high-deposition-rate printing, and where the first material is cast or forged or rolled steel, and the second material is stainless steel. In embodiments, at least one of the covering layer and the wall comprises or is formed of a material different from the first material and/or the second material. For example, the first layer is forged, the second layer is deposited by a first additive manufacturing technology (e.g., high-deposition-rate printing), the wall is fabricated by means of high-accuracy printing, and the covering layer is deposited by a second additive manufacturing technology (e.g., high-deposition-rate printing. The first and the second additive manufacturing technology may be different, preferably the same (e.g., to reduce complexity of the manufacturing steps). In this example, the first material may be formed of cast or forged or rolled steel, the second material may be stainless steel, the wall is formed of the second material, and the covering layer may be formed of bronze. It may be advantageous that second material has low thermal conductivity and/or the second layer comprises or is formed of low thermal conductive material, as this reduced heat exchange between the first and second layers, and thereby, improves the heat exchange between the channels and the exterior of the device (e.g., with a part to be molded). It may be further advantageous that the first material is a low-cost material, which allows to keep costs low when using more expensive material(s) for fabricating/depositing the second layer.

In embodiments, the device comprises a groove within the substrate thereby further defining the channel in the substrate. Thus, first forming the groove and then welding the wall onto the substrate, thereby defines the channel. In preferred embodiments the wall and the groove are contiguous with each other, i.e., the wall may at least partially, preferably completely, cap the groove. Thus, by welding the wall onto the substrate the channel may be defined as the inner surface of the wall and the groove.

In groove-related embodiments, the groove is formed in the second layer of the substrate. Therefore, the second layer may be deposited such that the thickness is large enough to form the groove, e.g., the thickness of the second layer is larger than or equal to the expected depth of the groove. Additionally, or alternatively, the depth of the groove may be in view of the thickness of the second layer, e.g., the depth of the groove is less than or equal to, preferably less than or almost equal to, the thickness of the second layer. In preferred embodiments, an inner surface of the groove comprises or is formed of the second material. In embodiments, the inner surface of the channel (i.e., the inner surface of the groove and the wall) may be made of the second material.

In groove-related embodiments, the groove is multi-directional comprising twists and turns. Additionally, or alternatively, the groove may be conformal to the contour of the substrate. This may allow to more easily define a channel comprising twists and turns, and, additionally or alternatively, being conformal to the contour of the substrate. However, the channel may be is multi-directional comprising twists and turns, and, additionally or alternatively, being conformal to the contour of the substrate, with at least one of the groove and the wall being multi-directional and comprising twists and turns, and, additionally or alternatively, being conformal to the contour of the substrate.

In groove-related embodiments, the groove has one or more variable dimensions along the direction of the extension of the groove. For example, a first portion of the groove has a larger depth and/or diameter than a second portion of the groove. This may allow to create pressure in portions of the channel where the groove is deeper and/or wider compared to sections with shallower and/or narrower grooves. The one or more variable dimensions may promote turbulence and mixing within the channel. Furthermore, by carefully designing the groove dimension(s) variations, you can influence the direction and velocity of fluid flow within the channel, thereby allowing more precise control over fluid distribution.

In embodiments, slots adjacent to the wall and/or the groove may be first created (e.g., by subtractive manufacturing), before attaching the wall onto the substrate. The wall may be attached onto the substrate at the slots, such as by welding or adhering, or other attaching means i.e., the attaching is performed in the slots and/or between the wall the inner surface of the slots. In embodiments, the welding fills the slots completely, preferably, the welding is flush with the outer surface of the substrate. In embodiments where the wall comprises two legs, each foot is attached, e.g., welded, onto the substrate, particularly at the respective slot. Each leg may be attached, e.g., welded, to the respective slot, i.e., to the inner surface of the respective slot. In embodiments where the wall is flat, the edges of the wall are attached, e.g., welded, onto the substrate, particularly at the respective slot. This may advantageously allow the covering layer to be efficiently and effectively deposited on a continuous surface, without having to take into account a large differential height of the wall. In preferred embodiments, the wall is flush with the substrate, i.e., the outer surface of the wall is flush with the outer surface of the substrate. This may advantageously allow the covering layer to be more efficiently and effectively deposited on a continuous surface, without having to take into account a differential height of the wall. In even more preferred embodiments, both the wall and the welding in the slots are flush with the substrate, particularly the outer surface of both the wall and the welding are flush with the outer surface of the substrate. This may advantageously allow the covering layer to be even more efficiently and effectively deposited on a continuous surface, without having to take into account a large differential height of the wall and the welding thereof to the substrate.

In embodiments, each of the slots is multi-directional comprising twists and turns. Additionally, or alternatively, each of the slots may be conformal to the contour of the substrate. This may allow to more easily weld the wall onto the substrate, particularly at the respective slot (i.e., to the inner surface of the respective slot). In embodiments, the slots extend multi-directionally, preferably contiguous with the groove and/or the wall.

In embodiments, the slots concern side slots or recesses. In such embodiments, the slots or recesses may form an angle with the outer surface of the substrate, such as -20 degrees or less, -25 degrees or less, -30 degrees or less, -35 degrees or less, -40 degrees or less, -45 degrees or less, -50 degrees or less, -55 degrees or less, -60 degrees or less, etc.

In embodiments, each foot or edge of the wall forms an angle with the outer surface of the substrate. In such embodiments, each foot or edge of the wall may form an angle with the outer surface of the substrate, such as 90 degrees or more, 100 degrees or more, 110 degrees or more, 120 degrees or more, 130 degrees or more, 140 degrees or more, 150 degrees or more, etc.

In embodiments, each foot or edge of the wall forms an angle with the surface of the respective slot or recess, such as 70 degrees or more, 75 degrees or more, 80 degrees or more, 85 degrees or more, 90 degrees or more, 100 degrees or more, 110 degrees or more, 120 degrees or more, 130 degrees or more, 140 degrees or more, 150 degrees or more, etc.

In embodiments, the device comprises a plurality of walls which are each attached, e.g., welded, onto the substrate thereby defining a plurality of channels, respectively. The device may comprise the covering layer extending over the substrate and covering at least each of the walls, wherein each of the wall is prefabricated, and wherein the covering layer is integrally formed. In embodiments, the plurality of walls may be identical. Alternatively, each of the plurality of walls may be different. Alternatively, some of the plurality of walls may be different, e.g., at least two walls are different, at least three walls are different, etc.

In groove-related embodiments, the device may comprise a plurality of grooves in the substrate thereby further defining the plurality of channels, respectively, at least partially in the substrate, preferably wherein the grooves are formed in the second layer of the substrate. In groove-related embodiments, the grooves are contiguous with the walls, respectively. In groove-related embodiments, the plurality of grooves may be identical. Alternatively, each of the plurality of grooves may be different. Alternatively, some of the plurality of grooves may be different, e.g., at least two grooves are different, at least three grooves are different, etc.

In groove-related embodiments of the device comprising a plurality of walls and a plurality of grooves, each of the walls is flat and preferably each of the walls is flush with the substrate. Alternatively, each of the walls is curved. Alternatively, some of the walls are flat and some of the walls are curved, preferably at least some of the flat walls are flush with the substrate. For example, at least two walls are flat, at least two walls are curved, and one of the flat walls is flush with the substrate.

In embodiments where slots are first provided in the substrate, a slot in between two walls and/or two grooves may be a common slot to said two walls and/or two grooves. This may advantageously allow to reduce the number of slots, and thereby, allow to increase the number of walls and/or grooves and/or channels, while reducing the number of steps needed to provide said slots.

### Examples

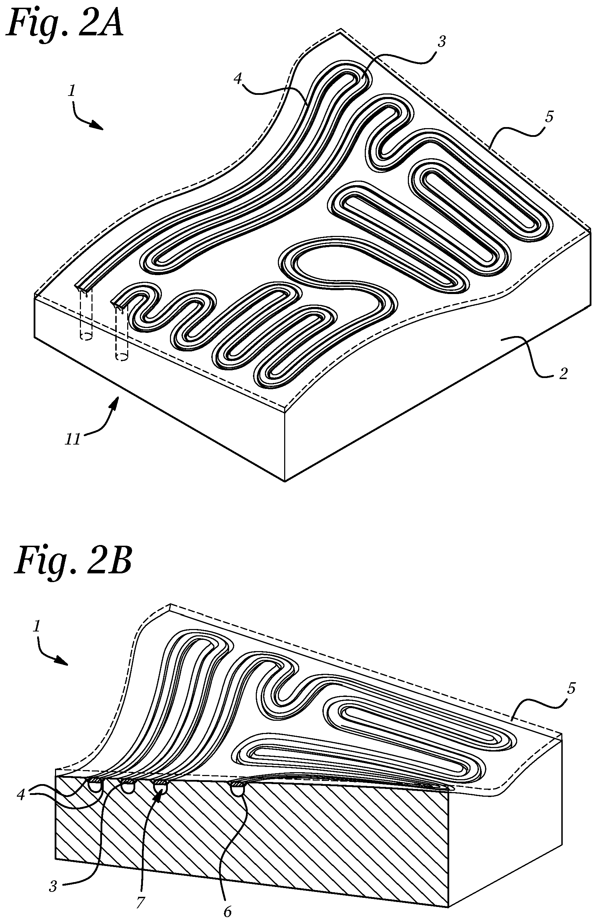

Example embodiments of the invention will be described with reference to Fig. 2A-2B, 3A-3B, 4A-4C, 5A-5C, 6A-6C, 7A-7C, 8A-8C, which are not intended to limit the scope of the invention in any way.

### Example 1: example of a device according to the invention

This example is described with reference to Fig. 2A-2B. In this example according to embodiments of the invention, the device 1 comprises a substrate 2, a wall 3 welded onto the substrate 2 thereby defining a channel 7, and a covering layer 5 extending over and covering the substrate 2 and the wall 3.

As can be seen in Fig. 2A-2B, the substrate 2 has a complex and non-uniform and/or non-planar shape, where different parts of the substrate 2 have varying thicknesses, and where its surface rises and falls like a landscape, featuring pronounced "hills" and a "valley". Furthermore, as shown in Fig. 2A, the substrate 2 has two holes extending from the bottom side 11 of the substrate 2 towards the top side of the substrate 2 on top of which the wall 3 is welded, thereby defining the inlet and outlet of the channel 7. These undulations introduce complexities in the manufacturing of the device, particularly of the wall and even more particularly the channel, which may require, in some cases, a hybrid and synergetic use of different additive manufacturing technologies, which area combined in an innovative way.

For the sake of simplicity, the covering layer 5 is shown as a transparent layer to show the complex pattern of the wall 3, as well as the channel 7. As shown in Fig. 2A, the wall 3 and the channel 7 are multi-directional and comprise a plurality of twists and turns. The channel 7 is shown to be conformal to the contour of the substrate 2.

As shown in Fig. 2B, the device 1 further comprises a groove 6 formed in the substrate 2 thereby further defining the channel 7 with the wall 2. The groove 6 is conformal to the contour of the substrate 2. The groove 6 allows the wall 3 to be flat and still defining the channel 7, since there is no need for additional space to be defined by the wall 3. Furthermore, this allows the wall 3 to be conformal to the contour of the substrate 2.

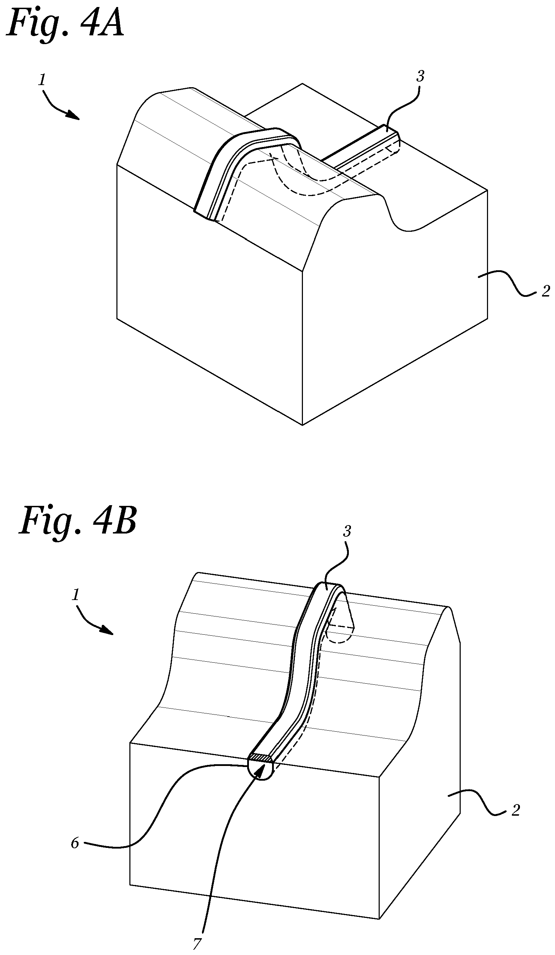

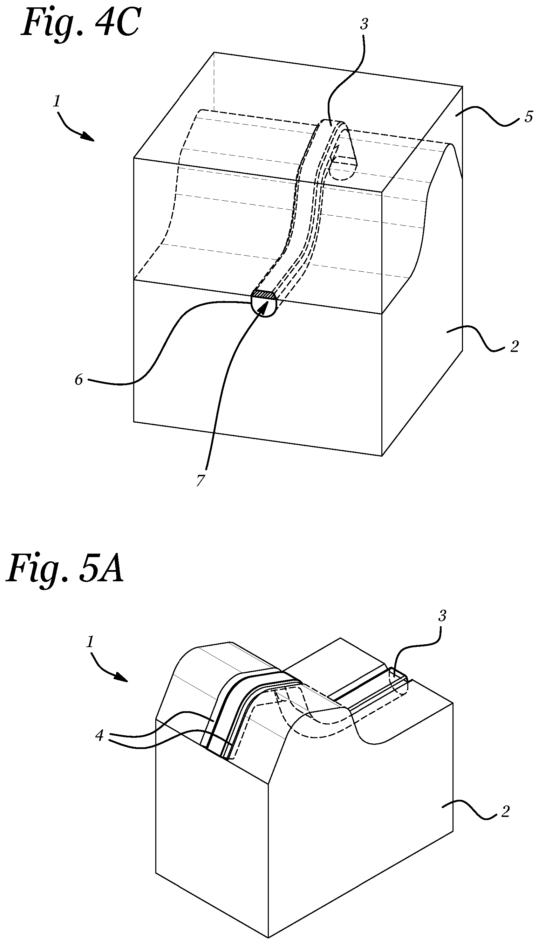

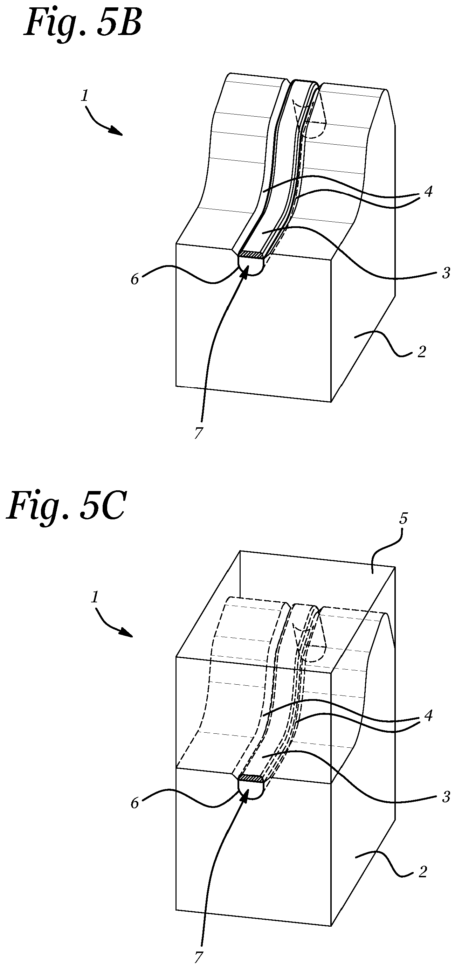

The inventors have found that by providing slots 4 on (the outer surface of) the substrate 2, shown adjacent to the wall 3 and/or the groove 6, the wall 3, particularly being flat, can be more effectively welded onto the substrate 2. The slots 4 provide a gap allowing for complete penetration of the weld into the wall 3, thereby providing a complete weld between the wall 3 and the substrate 2. This can allow the wall 3 to be flush with the outer surface of the substrate, thereby, requiring minimal post-processing. Therefore, the covering layer 5 can be more efficiently and effectively deposited onto and covering the substrate 2 and the wall 3 in a single additive manufacturing step. In this example, the covering layer 5 is deposited as an even layer covering the substrate 2, thereby following the contour of the substrate 2. As is shown in Fig. 2A-2B, the covering layer 5 continues the same complex and non-uniform shape. The slots 4 and the flat wall 3 are described in more detail with reference to Fig. 5A-5C below. Alternatively, the device 1 does not comprise slots 4; such an embodiment is described in more detail with reference Fig. 4A-4C below.

As shown in Fig. 2A, the wall 3, the slots 4, the groove 6, and the channel 7 extend along a plurality of directions and for a plurality of lengths. For example, a first portion of the wall 3, the slots 4, the groove 6, and the channel 7 extends along the length of the substrate 2 for the longest distance. In another example, a second portion of the wall 3, the slots 4, the groove 6, and the channel 7 extends along the width of the substrate 2 for almost half the width of the substrate 2. Here, the wall 3, the slots 4, the groove 6, and the channel 7 are multi-directional comprising a plurality of twists and turns, provided in/on different thickness of the substrate. This is a particularly complex pattern of the wall 3, the slots 4, the groove 6, and the channel 7 since portions of the wall 3 and the channel 7 extend in a first direction, and second portions of the wall 3, the slots 4, the groove 6, and the channel 7 extend in a second direction opposite to the first direction, wherein in both first and second directions (e.g., along the length of the substrate 2), the wall 3, the slots 4, the groove 6, and the channel 7 are multi-directional comprising twists and turns and are conformal to the contour of the substrate 2. In this example, the wall 3, the slots 4, the groove 6, and the channel 7 further extend in a third direction and a fourth direction (e.g., along the width of the substrate 2). To add to the complexity, portions of the wall 3, the slots 4, the groove 6, and the channel 7 are further provided in close proximity of each other, for providing, e.g., more homogeneous cooling or heating of a mold, which can be difficult or even not possible to manufacture by the method of the prior art, while ensuring the robustness and effective welding of the components of the device.

### Example 2: example of a device according to the invention

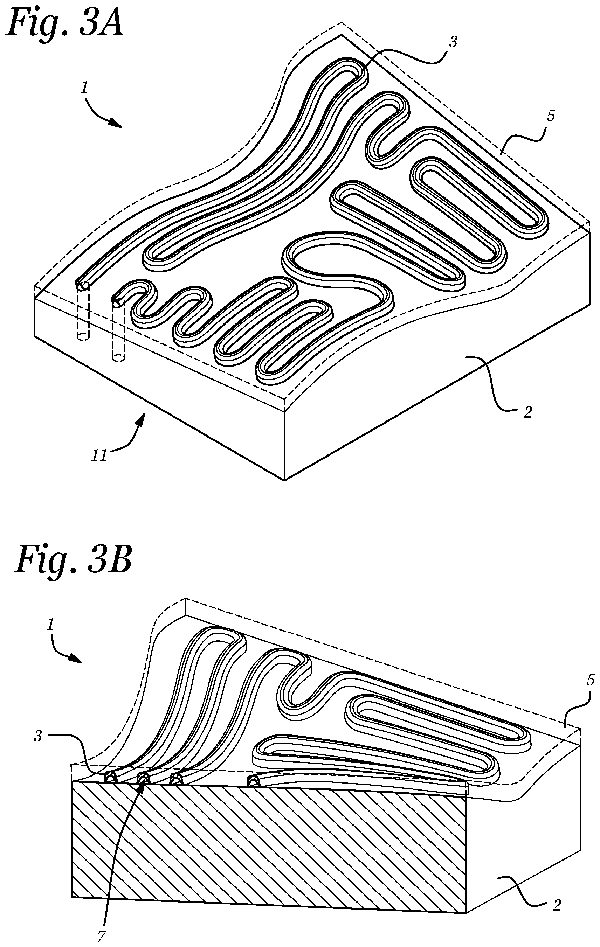

This example is described with reference to Fig. 3A-3B. This example describes a device 1 which corresponds in many aspects and/or features to the device 1 in Example 1 described with reference to Fig. 2A-2B, however here, the device 1 of Fig. 3A-3B does not comprise the groove 6 and the slots 4 of Fig. 2A-2B. Furthermore, in this example according to embodiments of the invention, the wall 3 is curved and welded onto the substrate 2 defining a channel.

In this example, the covering layer 5 is deposited over and covering the substrate 2 and the wall 3. Here, the single additive manufacturing step takes into account the dimensions of the wall 3 to deposit less material of the covering layer 5 on the wall 3 and more of said material on the other parts of the substrate 2. This may allow to deposit the covering layer 5, covering the substrate 2 and following the contour of the substrate 2. As is shown in Fig. 3A-3B, the covering layer 5 continues the same complex and non-uniform shape. The curved wall 3 is described in more detail with reference to Fig. 6A-6C below.

### Example 3: example of a device according to the invention

This example is described with reference to Fig. 4A-4C. In this example, the device 1 may be that of Fig. 2A-2B (excluding the slots 4). In this example according to embodiments of the invention, the device 1 comprises a groove 6 formed in the substrate 2 and a wall 3 welded onto the substrate 2, such that the wall 3 and the groove 6 are contiguous or opposite/facing each other. Thereby the channel 7 is defined between the groove 6 and the wall 3.

In this example, the groove 6 is conformal to the contour of the substrate 2. The groove 6 is large enough such that it allows the wall 3 to be flat, since there is no need for additional space to be defined by the wall 3. Furthermore, this allows the wall 3 to be conformal to the contour of the substrate 2.

As shown in Fig. 4B-4C, the edges of the wall 3 taper allowing for improved welding of the wall 3, particularly the edges of the wall to the substrate 2.

The device 1 comprises a covering layer 5 which is integrally formed, i.e., deposited by means of a single additive manufacturing step. As is shown in Fig. 4C, the covering layer 5 covers the substrate 2 and the wall 3, but does not necessarily continue the same complex and non-uniform shape. For instance, at higher thicknesses of the substrate 2, less material of the covering layer 5 is deposited compared to lower thicknesses of the substrate 2. This is shown as a flat outer surface of the covering layer in Fig. 4C. However, the covering layer 5 may have any possible shape taking into account the thicknesses of the substrate 2 and the dimensions of the wall 3.

### Example 4: example of a device according to the invention

This example is described with reference to Fig. 5A-5C. In this example, the device 1 may be that of Fig. 2A-2B (including the slots 4). This example describes a device 1 which corresponds in many aspects and/or features to the device 1 in Example 3 described with reference to Fig. 4A-4C, however here, the difference is that the device 1 further comprises slots 4.

The inventors have found that by providing slots 4 on (the outer surface of) the substrate 2, shown adjacent to the wall 3 and/or the groove 6, the wall 3, particularly being flat, can be more effectively welded onto the substrate 2. The slots 4 provide a gap allowing for complete penetration of the weld into the wall 3, thereby providing a complete weld between the wall 3 and the substrate 2. This can allow the wall 3 to be flush with the outer surface of the substrate, thereby, requiring minimal post-processing. Therefore, the covering layer 5 can be more efficiently and effectively deposited onto and covering the substrate 2 and the wall 3 in a single additive manufacturing step. In this example, the covering layer 5 covers the substrate 2 and the wall 3, but does not necessarily continue the same complex and non-uniform shape. For instance, at higher thicknesses of the substrate 2, less material of the covering layer 5 is deposited compared to lower thicknesses of the substrate 2. This is shown as a flat outer surface of the covering layer in Fig. 5C. However, the covering layer 5 may have any possible shape taking into account the thicknesses of the substrate 2 and the dimensions of the wall 3.

As can be seen in Fig. 5A-5C, the substrate has a complex and non-uniform shape, where its surface rises and falls like a landscape, featuring a more pronounced "hill" and "valley". These undulations introduce complexities in the manufacturing of the device, particularly of the wall and the channel, which may require, in some cases, a hybrid and synergetic use of different additive manufacturing technologies, which area combined in an innovative way.

### Example 5: example of a device according to the invention

This example is described with reference to Fig. 6A-6C. In this example, the device 1 may be that of Fig. 3A-3B. This example describes a device 1 which corresponds in many aspects and/or features to the device 1 in Example 3 described with reference to Fig. 4A-4C, however here, the difference is that the wall 3 comprised in the device 1 is curved.

As shown in Fig. 6B-6C, the wall 3 comprises two legs 3a wherein each leg 3a comprises a foot welded onto the substrate 2. In this example, each leg 3a comprises a section which tapers towards the respective foot. Fig. 6B-6C show the tapering at the inner surface of each leg 3a. This may advantageously allow for weld penetration, i.e., the welding penetrating through the foot, which improves the welding of the wall, particularly the foot onto the substrate, e.g., preventing excess weld penetration or preventing a partial penetration, and thereby eliminating the risk of sharp notches that can serve as crack initiation sites. Furthermore, the tapering may also increase the dimensions of the channel while ensuring the rigidity and structural integrity of the wall.

### Example 6: example of a device according to the invention

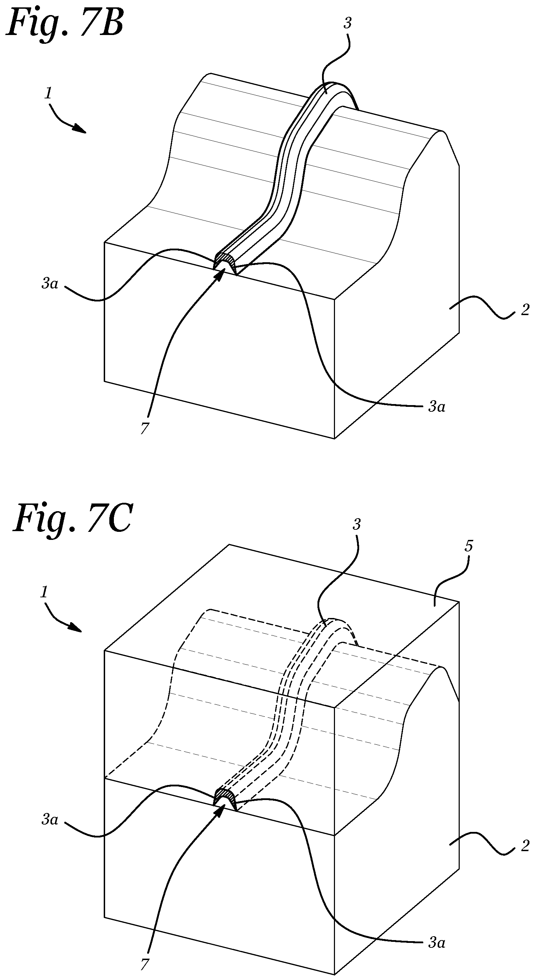

This example is described with reference to Fig. 7A-7C. In this example, the device 1 may be that of Fig. 3A-3B. This example describes a device 1 which corresponds in many aspects and/or features to the device 1 in Example 5 described with reference to Fig. 6A-6C, however here, the difference is that the device 1 does not comprise the groove 6 of Fig. 6A-6C.

In this example, the channel 7 is defined by the attaching, e.g., welding, of the wall 3 onto the substrate 2. This shows that the cross-sectional shape of the wall 3, being a curved wall with two legs, allows to define the channel 2, without the need for a groove to be made. This reduces the number of steps needed to define the channel 7.

### Example 7: example of a device according to the invention

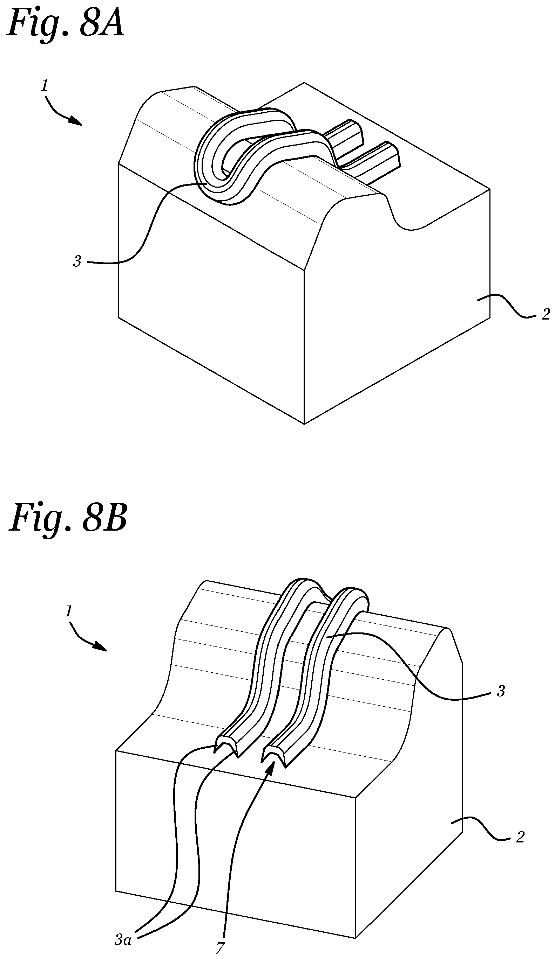

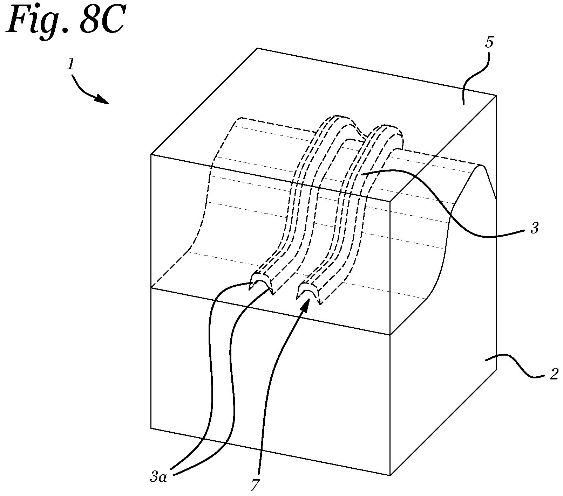

This example is described with reference to Fig. 8A-8C. In this example, the device 1 may be that of Fig. 3A-3B. This example describes a device 1 which corresponds in many aspects and/or features to the device 1 in Example 6 described with reference to Fig. 7A-7C, however here, the difference is that the wall 3 and the channel 7 show more pronounced extension along is multiple directions and having more pronounced twists and turns. This is a particularly complex pattern of the wall 3 and the channel 7 since a first portion of the wall 3 and the channel 7 extends in a first direction, and a second portion of the wall 3 and the channel 7 extends in a second direction opposite to the first direction, wherein in both first and second directions, the wall 3 and the channel 7 are multi-directional comprising twists and turns and are conformal to the contour of the substrate 2.

The devices in Examples 3-6 may comprise a similar complex pattern of at least the wall 3 and the channel 7, and in some cases also of the groove 6 and/or of the slots 4.

### (End of Example 7)

Although the present invention has been described above with reference to certain embodiments thereof, it will be evident that various modifications and changes may be made to these embodiments without departing from the broader scope of the present invention, as defined by the appended claims.

## Claims

1. A device (1) comprising:
- a substrate (2);
- a wall (3) which is welded onto the substrate (2) thereby defining a channel (7); and
- a covering layer (5) extending over the substrate (2) and covering at least the wall (3),
wherein the wall (3) is prefabricated, and
wherein the covering layer (5) is integrally formed.

2. The device according to claim 1, wherein the channel (7) is multi-directional and comprises twists and turns.

3. The device according to claim 1 or claim 2, wherein the channel (7) is conformal to the contour of the substrate (2) and preferably to the contour of the covering layer (5).

4. The device according to any one of claim 1-3, where the wall (3) is prefabricated by using high-accuracy printing.

5. The device according to any one of claims 1-4, wherein the covering layer (5) is deposited by using high-deposition-rate printing.

6. The device according to any one of claims 1-5, wherein the covering layer (5) extends over the substrate (2) at least two times the width of the wall (3), preferably at least three times the width of the wall (3), more preferably extending across the width of the substrate (2).

7. The device according to any one of claims 1-6, wherein the wall (3) comprises two legs (3a), wherein each leg (3a) comprises a foot welded onto the substrate (2), wherein each leg (3a) comprises a section which tapers towards the respective foot.

8. The device according to any one of claims 1-7, wherein at least two of the substrate, the wall, and the covering layer comprise different materials, preferably wherein all of the substrate, the wall, and the covering layer comprise different materials.

9. The device according to any one of claims 1-8, wherein the substrate (2) comprises a first layer formed of a first material and a second layer formed of a second material atop the first layer, wherein the wall (3) is welded onto the second layer, preferably wherein the first material is a forged or cast material, and the second material is a printed material.

10. The device according to any one of claims 1-9, further comprising a groove (6) in the substrate (2) thereby further defining the channel (7) in the substrate (2), preferably wherein the groove (6) is formed in the second layer of the substrate (2).

11. The device according to claim 10, wherein an inner surface of the groove (6) is made of the second material, preferably, the inner surface of the channel (7) is made of the second material.

12. The device according to claim 10 or claim 11, wherein the wall (3) is flat and flush with the substrate (2).

13. The device according to any one of claims 1-12, wherein the channel (7) has a diameter of less than or equal to 30 mm, preferably less than or equal to 20 mm, even more preferably less than or equal to 10 mm.

14. A method of manufacturing a device (1) comprising a channel (7), preferably the device (1) according to claims 1-13, the method comprising:
- providing a substrate (2);
- welding a wall (3) onto the substrate (2) for defining the channel (7); and
- depositing a covering layer (5) covering at least the wall (3) and extending over the substrate (2) for obtaining the device (7),
wherein the wall (3) is prefabricated, and
wherein the covering layer (5) is deposited by means of a single additive manufacturing step.

15. A kit comprising:
- a substrate (2);
- a wall (3) which is to be welded on the substrate (2) for defining a channel (7); and
- a set of instructions and/or illustrations directing a user to weld the wall on the substrate and to integrally form a covering layer extending over the substrate and covering at least the wall.
